# EUROPÄISCHE PATENTSCHRIFT

(11) **EP 3 037 767 B1**
(45) Veröffentlichungstag und Bekanntmachung des Hinweises auf die Patenterteilung: **07.08.2019**
(21) Anmeldenummer: 15199380.5
(22) Anmeldetag: 10.12.2015
(51) Int. Cl.: F28D 7/02, F28D 7/16, F02M 26/28, F01N 5/02, F02M 26/32

(54) **WÄRMEÜBERTRAGER**
HEAT EXCHANGER
FLUIDE CALOPORTEUR

(30) Priorität: 22.12.2014 DE 102014226883
(43) Veröffentlichungstag der Anmeldung: 29.06.2016
(73) Patentinhaber: MAHLE International GmbH, 70376 Stuttgart (DE)
(72) Erfinder: Siegel, Albrecht, 71642 Ludwigsburg (DE); Hund, Simon, 70199 Stuttgart (DE)
(74) Vertreter: Grauel, Andreas

(56) Entgegenhaltungen:
- EP-A1- 2 372 287
- EP-A1- 2 728 155
- WO-A1-2013/164083
- JP-A- H1 113 550
- JP-A- 2013 053 620

## Beschreibung

### Technisches Gebiet

Die Erfindung betrifft einen Wärmeübertrager, insbesondere zur Wärmeübertragung zwischen heißem Abgas aus einem Verbrennungsmotor und einem Motorkühlmittel, insbesondere gemäß dem Oberbegriff von Anspruch 1.

### Stand der Technik

Abgaswärmeübertrager werden bekannterweise zur Abgaskühlung in Kraftfahrzeugen in Strömungsrichtung des Abgases unmittelbar nach dem Verbrennungsmotor angeordnet, um durch Wärmeübertragungsprozesse Energie von heißen Motorabgasen auf ein flüssiges Motorkühlmittel zu übertragen, um die Temperatur des Abgases zu reduzieren. Dazu wird das Abgas üblicherweise durch Rohre geleitet, welche von dem Motorkühlmittel umströmt werden. Eine optimale Leistung eines solchen Wärmeübertragers bedingt eine gleichmäßige Verteilung des Kühlmittels um die Abgas führenden Rohre des Wärmeübertragers.

Bei einer Ausführung eines Wärmeübertragers nach dem Gleichstromprinzip, nach welchem Abgas und Kühlmittel in gleicher Richtung längs der Rohre strömen, liegen im Eintrittsbereich des heißen Abgases die höchsten Temperaturen vor. Dadurch kann die Gefahr eines Siedens des Motorkühlmittels bestehen, was zu einer unerwünschten Leistungsminderung des Wärmeübertragers führen kann.

Aus dem Stand der Technik sind auch Wärmeübertrager mit einem Ringkanal bekannt, wobei eine Aufweitung des Gehäusequerschnitts im Bereich der Kühlmittelanschlüsse, insbesondere am Kühlmitteleintritt, den Ringkanal ausbildet. Dadurch kann eine gleichmäßige Verteilung des Kühlmittels zwischen den Wärmeübertragerrohren erreicht werden. Allerdings reduziert eine solche Lösung das Siederisiko des Kühlmittels nicht signifikant. Zudem benötigt ein derartiger Ringkanal mehr Bauraum und erhöht neben dem Herstellaufwand auch den Materialeinsatz und damit insbesondere auch die Kosten.

Die Druckschrift DE 10 2011 081 031 A1 offenbart einen Wärmeübertrager mit einem dreidimensionalen Separator. Ein solcher Separator ist ein zusätzliches Bauteil, welches möglichst eine gleichmäßige Verteilung des Kühlmittels zwischen den einzelnen Wärmeübertragerrohren ermöglichen soll. Der Separator ist dabei so gestaltet, dass eine Reduzierung des Siederisikos möglich ist. Allerdings ist ein dreidimensionaler Separator ein zusätzliches Bauteil, wobei zu seiner Anbindung an den Wärmeübertrager ein zusätzlicher Fügeschritt nötig ist, was insgesamt zu Mehrkosten führt.

WO 2013/164083 beschreibt einen Wärmeübertrager gemäß dem Oberbegriff des Anspruchs 1.

Zudem ist bekannt, die Funktion eines dreidimensionalen Separators in eine Dichtung des Wärmeübertragers zu integrieren. Bei einer derartigen Integration wird auch ein Mehr an Bauraum benötigt, was nachteilig ist und wodurch eine solche Lösung bauraumbedingt oder kostenbedingt nicht immer darstellbar ist.

### Darstellung der Erfindung, Aufgabe, Lösung, Vorteile

Der Erfindung liegt die Aufgabe zugrunde, einen Wärmeübertrager zur Verfügung zu stellen, bei welchem das Siederisiko des Kühlmittels im Inneren des Gehäuses des Wärmeübertragers, insbesondere in einem Eintrittsbereich eines heißen Abgases, reduziert ist, und welcher einfach und kostengünstig herstellbar ist.

Die Aufgabe wird mit den Merkmalen von Anspruch 1 gelöst.

Die Erfindung betrifft einen Wärmeübertrager laut der Merkmale des Anspruchs 1.

Diese Merkmale haben den Vorteil, dass ein zweites Fluid, insbesondere ein Kühlmittel, wie beispielsweise ein Motorkühlmittel, derart in das Gehäuse des Wärmeübertragers einströmen kann, dass eine gleichmäßige, kontinuierliche Versorgung des Eintrittsbereichs des ersten Fluids, insbesondere eines Abgases, wie beispielsweise eines heißen Abgases eines Verbrennungsmotors, mit dem zweiten Fluid möglich ist und damit das Siederisiko des zweiten Fluids im Wärmeübertrager, insbesondere im Eintrittsbereich des ersten Fluids, reduziert wird, ohne mehr Bauraum zu benötigen. Die Integration der Stromumlenkungseinheit in den Fluideinlass kann dabei besonders einfach und somit kostengünstig erfolgen.

Es ist besonders zweckmäßig, wenn die Strömungsbegrenzungswand im stromabwärtigen Abschnitt derart gewölbt ausgebildet ist, dass das im stromabwärtigen Abschnitt des Fluideinlasses strömende zweite Fluid in der Öffnung eine Strömungsrichtung aufweist bzw. erfährt und die Strömungsrichtung in der Öffnung einen Winkel α zur Längsrichtung der Rohre des Rohrbündels ausbildet, wobei der Winkel α ungleich 90° ist. Somit kann das zweite Fluid, insbesondere ein Kühlmittel, wie beispielsweise ein Motorkühlmittel, in einem Winkel α, der nicht senkrecht zur Längsrichtung der Rohre ist, einströmen und so eine günstige Verteilung des zweiten Fluids ermöglichen.

Gemäß eines Ausführungsbeispiels ist es vorteilhaft, wenn der Winkel α im Bereich von 10° bis 80° ist, vorteilhaft von 20° bis 70° ist, weiterhin vorteilhaft von 30° bis 60° ist oder insbesondere vorteilhaft 45° beträgt. Durch eine Ausbildung des Fluideinlasses in der Art, dass der Winkel α an die Geometrie, wie etwa die Höhe und die Position des Fluideinlasses, einer Ausführungsform des Gehäuses eines Wärmeübertragers angepasst sein kann, ist eine günstige Verteilung des zweiten Fluids im Eintrittsbereich des ersten Fluids, insbesondere eines Abgases, möglich. Dadurch wird eine gute Kühlung im Eintrittsbereich des ersten Fluids ermöglicht, was das Siederisiko reduziert.

Von Vorteil ist auch, wenn der Fluideinlass für das zweite Fluid benachbart zu einem näher gelegenen Endbereich der beiden Endbereiche angeordnet ist, wobei die Strömungsrichtung des zweiten Fluids in der Öffnung in Richtung auf den näher gelegenen Endbereich zeigt oder in diese Richtung geneigt ist. Somit kann das zweite Fluid, insbesondere ein Kühlmittel, in Richtung eines benachbarten Endbereichs einströmen, insbesondere in Richtung des Endbereichs, bei welchem das erste Fluid in das Gehäuse einströmt. Dadurch kann einströmendes zweites Fluid die Rohre, insbesondere in dem Endbereich, gleichmäßiger oder gleichmäßig umströmen und dadurch eine Gefahr des Siedens des zweiten Fluids verringern.

Es ist auch zweckmäßig, wenn die Rohre des Rohrbündels eine Ebene ausbilden bzw. definieren, wobei die Ebene senkrecht zur Längsrichtung der Rohre des Rohrbündels angeordnet ist und wobei an eine Strömungsbegrenzungswand im stromabwärtigen Abschnitt des Fluideinlasses mindestens eine Tangente anlegbar ist und die mindestens eine Tangente tangential an der Strömungsbegrenzungswand an der Stelle der Öffnung anliegt, wobei die mindestens eine Tangente mit der Ebene einen Winkel β bildet, wobei der Winkel β ungleich 0° und ungleich 90° ist. Dadurch kann die Strömungsbegrenzungswand insbesondere nahe der Öffnung derart ausgebildet sein, dass der stromabwärtige Abschnitt des Fluideinlasses eine erfindungsgemäße Stromumlenkungseinheit aufweist bzw. ausbildet, die erfindungsgemäß eine vorteilhafte Umlenkung der Strömung bewirkt, um das Siederisiko zu reduzieren.

Dabei ist es besonders vorteilhaft, wenn der Winkel β im Bereich von 10° bis 80° ist, vorteilhaft von 20° bis 70° ist und weiterhin vorteilhaft von 30° bis 60° ist oder insbesondere vorteilhaft der Winkel β 45° beträgt. Dadurch kann die Strömungsbegrenzungswand derart ausgebildet sein, dass die Stromumlenkungseinheit an eine jeweilige Ausführungsform des Wärmeübertragers angepasst ist. Dabei kann der Winkel bei einem schmaleren Rohrbündel steiler sein als beispielsweise bei einem breiteren Rohrbündel, in Querrichtung des Rohrbündels quer zu seiner Längsrichtung betrachtet.

Vorteilhaft ist es, wenn der stromabwärtige Abschnitt des Fluideinlasses eine Längsrichtung aufweist, wobei die Strömungsbegrenzungswand des den Fluideinlass bildenden Kanals in dem stromabwärtigen Abschnitt eine Querschnittsfläche ausbildet, wobei in dem stromabwärtigen Abschnitt des Fluideinlasses die Querschnittsfläche in der Längsrichtung des stromabwärtigen Abschnitts des Fluideinlasses eine Verjüngung in stromabwärtiger Richtung zu der Öffnung hin aufweist. Durch eine solche Verjüngung der Querschnittsfläche weist die Strömungsbegrenzungswand im stromabwärtigen Abschnitt eine Stromumlenkungseinheit auf, wobei die Strömungsbegrenzungswand, insbesondere im stromabwärtigen Abschnitt, die Richtung des in dem Kanal strömenden zweiten Fluids festlegt und folglich auch die Richtung des durch die Öffnung in das Gehäuse einströmenden zweiten Fluids.

Zweckmäßig ist es, wenn das durch den stromaufwärtigen Abschnitt des Fluideinlasses strömende zweite Fluid eine Strömungsrichtung aufweist und die Strömungsrichtung in einem Winkel γ zu der Längsrichtung der Rohre des Rohrbündels angeordnet ist. In einer erfindungsgemäßen Ausführungsform ist der Winkel γ gleich 0°. Weiterhin ist vorteilhaft, dass der Winkel ungleich 0° ist, wie beispielsweise 45° oder 90° oder ein Wert zwischen 0° und 45° bzw. zwischen 45° und 90°. Dies hat den Vorteil, dass die Ausbildung des stromaufwärtigen Abschnitts des Fluideinlasses an den im Motorraum zur Verfügung stehenden Bauraum angepasst ist.

Von Vorteil ist, dass der Winkel γ einen Wert von 0°, 90°, 180° annimmt oder einen Wert zwischen 0° und 180° annimmt. Dadurch kann die Flexibilität der Anordnung des Wärmeübertragers im Motorraum erhöht werden.

Es ist zweckmäßig, wenn die Querschnittsfläche in dem stromabwärtigen Abschnitt des Fluideinlasses eine Aufweitung aufweist, wobei die Querschnittsfläche gegenüber einer kreisförmigen Querschnittsfläche aufgeweitet ist und die Aufweitung senkrecht zur Strömungsrichtung in stromabwärtiger Richtung zunimmt. Im Eintrittsbereich des ersten Fluids können insbesondere in den Ecken und/oder Randbereichen des Wärmeübertragers die höchsten Temperaturen auftreten. Durch die Aufweitung der Querschnittsfläche des Fluideinlasses wird das einströmende zweite Fluid in diese siedegefährdeten Bereiche geleitet.

Vorteilhafterweise ist bzw. sind der Fluideinlass und/oder der Fluidauslass für das zweite Fluid in das Gehäuse integriert und/oder als rohrförmiges Bauteil mit dem Gehäuse verbunden. Insbesondere bei einem Druckgussgehäuse aus Metall, insbesondere aus Aluminium, oder bei einem Spritzgussgehäuse aus Kunststoff ist bzw. sind der Fluideinlass und/oder der Fluidauslass in das Gehäuse integriert. So wird kein zusätzlicher Bauraum benötigt und es kann ein zusätzlicher Fügeschritt vermieden werden, was die Herstellung vereinfacht.

Weitere vorteilhafte Ausgestaltungen sind durch die nachfolgende Figurenbeschreibung und durch die Unteransprüche beschrieben.

### Kurze Beschreibung der Figuren der Zeichnungen

Nachstehend wird die Erfindung auf der Grundlage zumindest eines Ausführungsbeispiels anhand der Figuren der Zeichnung näher erläutert. Es zeigen:
- Fig. 1: einen Längsschnitt durch ein Ausführungsbeispiel eines erfindungsgemäßen Wärmeübertragers mit einem erfindungsgemäßen Fluideinlass,
- Fig. 2: eine perspektivische Außenansicht des Ausführungsbeispiels eines erfindungsgemäßen Wärmeübertragers gemäß Fig. 1,
- Fig. 3: eine perspektivische Ansicht des Fluideinlasses gemäß Fig. 1 und Fig. 2,
- Fig. 4: eine frontale Ansicht eines Fluideinlasses gemäß Fig. 3,
- Fig. 5: einen Längsschnitt durch den Fluideinlass gemäß Fig. 3 und Fig. 4 entlang der Linie A-A,
- Fig. 6: einen Längsschnitt durch den Fluideinlass gemäß Fig. 3 und Fig. 4 entlang der Linie B-B und
- Fig. 7: einen Längsschnitt durch den Fluideinlass gemäß Fig. 3 und Fig. 4 entlang der Linie C-C.

### Bevorzugte Ausführung der Erfindung

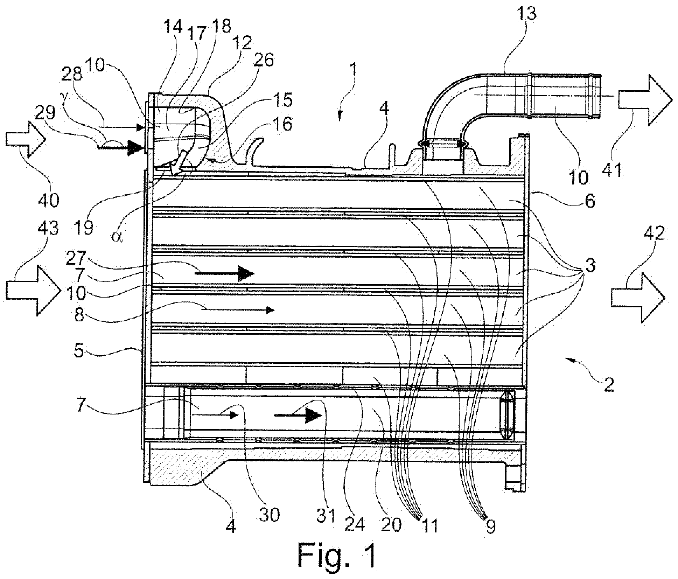

Die Figur 1 zeigt ein Ausführungsbeispiel eines Wärmeübertragers 1 mit einem Gehäuse, in welchem eine erfindungsgemäße Optimierung des Siederisikos erreicht ist.

Der Wärmeübertrager 1 weist ein Rohrbündel 2 auf, welches aus einer Mehrzahl von einzelnen Rohren 3 besteht. Dabei sind die Rohre 3 des Rohrbündels 2 bevorzugt in einer regelmäßigen oder unregelmäßigen Anordnung in Reihen oder in Kreisbögen oder anderweitig angeordnet. Die Rohre 3 können endseitig in Rohrböden aufgenommen sein oder rohrbodenlos mit nach außen weisenden Krägen etc. ausgebildet sein, um eine abdichtende Verbindung zu erreichen.

Das Innere der einzelnen Rohre 3 ist von einem ersten Fluid 7, insbesondere einem Abgas, wie beispielsweise einem heißen Abgas eines Verbrennungsmotors, durchströmbar und bildet so einen ersten Strömungskanal 9. Weiterhin ist es auch möglich, dass auch ein anderes Gas, ein Gasgemisch oder auch eine Flüssigkeit als erstes Fluid 7 die Rohre 3 durchströmen kann.

Die Rohre 3 des Rohrbündels 2 sind von einem zweiten Fluid 10, insbesondere einem Kühlmittel, wie beispielsweise einem Motorkühlmittel, umströmbar angeordnet, so dass damit ein zweiter Strömungskanal 11 gebildet ist. Dazu ist es vorteilhaft, dass die Rohre 3 gegenseitig voneinander einen definierten Abstand aufweisen, so dass dadurch ein Raum geschaffen wird, in welchem das zweite Fluid 10 strömen kann. Es ist auch möglich, dass das zweite Fluid 10 eine andere Flüssigkeit oder auch ein Gas sein kann.

Gemäß Figur 1 weisen die Rohre 3 eine Längsrichtung 8 auf und das erste Fluid 7, insbesondere das Kühlmittel, durchströmt ein jeweiliges Rohr 3 in einer Längsrichtung 8 des Rohres 3. Dabei kann das Rohr 3 grundsätzlich in Richtung 8 oder in der entgegengesetzten Richtung durchströmt werden.

Der Wärmeübertrager 1 weist ein Gehäuse 4 auf, wobei das Gehäuse 4 in seinem Inneren das Rohrbündel 2 mit seiner Mehrzahl von einzelnen Rohren 3 aufnimmt.

An zwei einander gegenüberliegenden Seiten weist das Gehäuse 4 gemäß Figur 1 einen ersten Endbereich 5 des Gehäuses 4 und einen zweiten Endbereich 6 des Gehäuses 4 auf.

Die einzelnen Rohre 3 des Rohrbündels 2 erstrecken sich, wie aus Figur 1 zu erkennen ist, in dem Gehäuse 4 des Wärmeübertragers 1. Vorteilhaft in der Art, dass die Längsrichtung 8 der Rohre 3 von dem einem der Endbereiche 5, 6 zu dem anderen der Endbereiche 5, 6 des Gehäuses 4 zeigt. Bei dem in Figur 1 dargestellten zweckmäßigen Ausführungsbeispiel des Wärmeübertragers verlaufen die einzelnen Rohre 3 parallel zueinander. Weiterhin ist gemäß Figur 1 vorteilhaft, dass die Rohre 3 gerade ausgebildet sind. Es ist alternativ auch möglich, dass die Rohre 3 bogenförmige oder gekrümmte, rohrförmige Elemente sein können und/oder in unregelmäßigen Strukturen zueinander angeordnet sein können.

Das Gehäuse 4 des Wärmeübertragers 1 weist einen Fluideinlass 12 für das zweite Fluid 10 und einen Fluidauslass 13 für das zweite Fluid 10 auf.

Wie in Figur 1 zu erkennen ist, ist der Fluideinlass 12 zweckmäßigerweise an einer Position benachbart zu dem ersten Endbereich 5 der beiden Endbereiche 5, 6 des Gehäuses 4 angeordnet. Dabei bedeutet benachbart, dass der Fluideinlass näher zu dem Endbereich 5 als zu dem Endbereich 6 angeordnet ist.

Weiterhin möglich ist, dass der Fluideinlass 12 auch an einer anderen Stelle des Gehäuses 4, wie insbesondere auch benachbart oder nahe oder näher zu dem zweiten Endbereich 6, angeordnet sein kann.

Der Fluidauslass 13 ist bei dem in Figur 1 gezeigten Ausführungsbeispiel der Erfindung an einer Position benachbart zu dem zweiten Endbereich 6 angeordnet. Weiterhin möglich ist, dass der Fluidauslass 13 auch an einer anderen vorteilhaften Position angeordnet sein kann.

Die Figur 1 zeigt ein Ausführungsbeispiel der Erfindung, bei welchem der Fluideinlass 12 und der Fluidauslass 13 an einer oberen Position des Gehäuses 4 angeordnet sind. Weiterhin möglich ist, dass der Fluideinlass 12 und/oder insbesondere der Fluidauslass 13 an einer anderen vorteilhaften Position, die nicht auf einer oberen Seite des Gehäuses 4 liegt, angeordnet sein kann/können. So können der Fluideinlass 12 und der Fluidauslass 13 auch an unterschiedlichen oder gegenüberliegenden Seiten des Gehäuses angeordnet sein.

Vorteilhafterweise ist der Fluideinlass 12, wie in Figur 1 gezeigt, in das Gehäuse 4 integriert. Weiterhin ist es möglich, den Fluideinlass 12 als rohrförmiges Bauteil zu gestalten und mit dem Gehäuse 4 zu verbinden, wie insbesondere durch Fügen, beispielsweise durch Schweißen, Kleben, Einpressen und/oder über eine Flanschverbindung oder Lötverbindung zu verbinden.

Die Figur 1 zeigt eine Ausführungsform der Erfindung, bei welcher der Fluidauslass 13 als rohrförmiges Bauteil gestaltet ist und mit dem Gehäuse 4 verbunden angeordnet ist, wie in eine Aufnahme eingesetzt ist. Weiterhin ist es möglich, den Fluidauslass 13 beispielsweise entsprechend der Gestaltung des Fluideinlasses 12 in das Gehäuse 4 zu integrieren.

Der Fluideinlass 12 dient zur Einströmung des zweiten Fluids 10, insbesondere eines Kühlmittels, in das Innere des Gehäuses 4 und somit in den zweiten Strömungskanal 11.

Der Fluidauslass 13 dient zur Ausströmung des zweiten Fluids 10, insbesondere einem Kühlmittel, aus dem Inneren des Gehäuses 4 und somit aus dem zweiten Strömungskanal 11.

Das erste Fluid 7, insbesondere ein Abgas, durchströmt die Rohre 3 in einer Längsrichtung 8 von einem der Endbereiche 5,6 zu dem anderen der Endbereiche 5, 6 des Gehäuses 4, wobei das erste Fluid 7 in dem einen Endbereich 5, 6 des Gehäuses 4 in die Rohre 3 einströmt und in dem anderen Endbereich 5, 6 des Gehäuses 4 aus den Rohren 3 ausströmt. Dadurch weist das erste Fluid 7 in den Rohren 3 eine Strömungsrichtung 27 auf. Gemäß Figur 1 ist es vorteilhaft, dass das erste Fluid 7 die Rohre 3 in einer Längsrichtung 8 von dem ersten Endbereich 5 zu dem zweiten Endbereich 6 durchströmt, wobei das erste Fluid 7 gemäß Figur 1 in dem ersten Endbereich 5 in die Rohre 3 einströmt und in dem zweiten Endbereich 6 aus den Rohren ausströmt. Insbesondere ist es vorteilhaft, dass alle Rohre 3 in einer gleichen Längsrichtung 8 durchströmt werden. Es ist auch möglich, dass die Rohre 3 von dem ersten Fluid 7 von dem zweiten Endbereich 6 in Richtung des ersten Endbereiches 5 durchströmt werden und das erste Fluid 7 in dem zweiten Endbereich 6 in die Rohre 3 einströmt und in dem ersten Endbereich 5 aus den Rohren 3 ausströmt.

Bei einer Ausbildung des erfindungsgemäßen Wärmeübertragers 1 gemäß Figur 1 ist der Fluideinlass 12 benachbart zu dem ersten Endbereich 5, in welchem das erste Fluid 7 in die Rohre 3 des Rohrbündels 2 einströmt, angeordnet und der Fluidauslass 13 ist benachbart zu dem zweiten Endbereich 6, in welchem das erste Fluid 7 aus den Rohren 3 des Rohrbündels 2 ausströmt, angeordnet, wobei der Wärmeübertrager 1 als Gleichstromwärmeübertrager bezeichnet ist.

Der Fluideinlass 12 weist einen stromaufwärtigen Abschnitt 14 und einen stromabwärtigen Abschnitt 15 auf. Der stromaufwärtige Abschnitt 14 dient zur Einströmung des zweiten Fluids 10, insbesondere einem Kühlmittel, in den Fluideinlass 12 und der stromabwärtige Abschnitt 15 dient zur Einströmung des zweiten Fluids 10 in das Gehäuse 4 und damit in den zweiten Strömungskanal 11. An den stromaufwärtigen Abschnitt kann eine Fluidleitung oder ein Fluidrohr angeschlossen werden, um den Wärmeübertrager mit zweitem Fluid 10 zu versorgen.

Gemäß Figur 1 weist der Fluideinlass 12 eine Strömungsbegrenzungswand 18 auf, wobei der Fluideinlass 12 einen Kanal 17 ausbildet, welcher durch die Strömungsbegrenzungswand 18 begrenzt ist und in dem das zweite Fluid 10 strömen kann. Der Kanal 17 bildet zudem im stromabwärtigen Abschnitt 15 eine Öffnung 19 als offenes Ende zu dem Inneren des Gehäuses 4 des Wärmeübertragers 1 aus und das zweite Fluid 10 kann durch die Öffnung 19 in das Gehäuse 4 einströmen.

Erfindungsgemäß ist, wie es aus Figur 1 zu erkennen ist, die Strömungsbegrenzungswand 18 des Fluideinlasses 12, insbesondere im stromabwärtigen Abschnitt 15, derart gewölbt ausgebildet, so dass der stromabwärtige Abschnitt 15 des Fluideinlasses 12 eine Stromumlenkungseinheit 16 aufweist.

Das zweite Fluid 10 strömt gemäß Figur 1 durch die Öffnung 19 in das Innere des Gehäuses 4 ein, wobei das im stromabwärtigen Abschnitt 15 strömende zweite Fluid 10 an der Stelle der Öffnung 19 eine Strömungsrichtung 26 aufweist. Die Strömungsbegrenzungswand 18 ist gemäß Figur 1, insbesondere im stromabwärtigen Abschnitt 15, derart gewölbt ausgebildet, so dass die Strömungsrichtung 26 des im stromabwärtigen Abschnitt 15 des Fluideinlasses 12 strömende zweite Fluid 10 in der Öffnung 19 einen Winkel α zur Längsrichtung 8 der Rohre 3 des Rohrbündels 2 ausbildet. Erfindungsgemäß ist ein Winkel α, wie in Figur 1 zu erkennen ist, ungleich 90°. Somit strömt das einströmende zweite Fluid 10 insbesondere nicht senkrecht zur Längsrichtung 8 der Rohre 3 in das Gehäuse 4 ein.

Vorteilhaft ist, dass der Winkel α im Bereich von 10° bis 80° ist, vorteilhaft von 20° bis 70° ist, weiterhin vorteilhaft von 30° bis 60° ist oder insbesondere vorteilhaft 45° beträgt. So kann die Strömungsrichtung 26 des aus der Öffnung 19 strömenden zweiten Fluids 10 vorteilhaft an unterschiedliche Ausführungsformen des Gehäuses 4 des Wärmeübertragers 1 angepasst werden. Insbesondere können so unterschiedliche Abstände des Fluideinlasses 12 zu dem ersten Endbereich 5 und/oder unterschiedliche Höhen des Gehäuses 4 und/oder die Breite des Rohrbündels berücksichtigt werden.

Vorteilhafterweise ist der Fluideinlass 12 für das zweite Fluid 10 benachbart zu einem näher gelegenen Endbereich 5, 6 der beiden Endbereiche 5, 6, wie insbesondere dem ersten Endbereich 5, angeordnet und die Strömungsrichtung 26 des zweiten Fluids 10 in der Öffnung 19 zeigt in Richtung des näher gelegenen Endbereichs 5, 6 oder ist in diese Richtung geneigt. Gemäß Figur 1 ist der Fluideinlass 12 benachbart zu dem ersten Endbereich 5 angeordnet und der Fluideinlass 12 ist derart ausgebildet, dass die Strömungsrichtung 26 des zweiten Fluids 10 in der Öffnung 19 in Richtung des ersten Endbereichs 5 zeigt oder in diese Richtung geneigt ist, so dass das einströmende zweite Fluid 10 in Richtung des ersten Endbereichs 5 einströmen kann. Vorteilhafterweise strömt das zweite Fluid 10 gemäß Figur 1 bei einem erfindungsgemäßen Wärmeübertrager 1 mit dem oben erläuterten Gleichstromprinzip entgegen der Strömungsrichtung 27 des ersten Fluids 7 ein, so dass in diesem Fall eine gleichmäßige Verteilung des zweiten Fluids 10 in dem Eintrittsbereich des ersten Fluids 7 erreicht wird. Das einströmende zweite Fluid 10, insbesondere ein Kühlmittel, weist im Vergleich zu einem im zweiten Strömungskanal 11 bereits befindlichen zweiten Fluid 10 eine geringere Temperatur auf, so dass das einströmende zweite Fluid 10 eine günstige Wärmeübertragung im Eintrittsbereich des ersten Fluids 7 ermöglicht und damit das Siederisiko des Wärmeübertragers 1 reduziert.

Der Fluideinlass 12, insbesondere der stromabwärtige Abschnitt 15 des Fluideinlasses 12, weist eine Längsrichtung 28 auf und das zweite Fluid 10 strömt gemäß Figur 1 in der Längsrichtung 28 durch den Fluideinlass 12.

Das durch den stromaufwärtigen Abschnitt 14 des Fluideinlasses 12 strömende zweite Fluid 10 weist eine Strömungsrichtung 29 auf und die Strömungsrichtung 29 ist in einem Winkel γ zur Längsrichtung 8 der Rohre 3 des Rohrbündels 2 angeordnet. Vorteilhafterweise nimmt dieser Winkel gemäß Figur 1 einen Wert von 0° oder 180° an. Weiterhin möglich ist, dass der Winkel γ einen Wert von 45°, 90° oder 135° annimmt oder einen Wert zwischen 0° und 180° annimmt. Dadurch kann der Fluideinlass 12 an die gewünschte Position des Wärmeübertragers 1, insbesondere im Motorraum, und den zur Verfügung stehenden Bauraum, insbesondere im Motorraum, angepasst werden.

Das Gehäuse 4 des Wärmeübertragers 1 weist einen Bypasskanal 20 auf. Der Bypasskanal 20 ist in einer Längsrichtung 30 des Bypasskanals 20 von dem ersten Fluid 7 durchströmbar, wobei die Längsrichtung 30 des Bypasskanals 20 von einem Endbereich 5,6 zu dem anderen der Endbereiche 5,6 zeigt und das erste Fluid 7 in einem der Endbereiche 5,6 in den Bypasskanal 20 einströmt und in dem anderen der Endbereiche 5,6 aus dem Bypasskanal 20 ausströmt, so dass das erste Fluid 7 in dem Bypasskanal 20 eine Strömungsrichtung 31 aufweist. Gemäß Figur 1 strömt das erste Fluid 7 in dem ersten Endbereich 5 in den Bypasskanal 20 ein und strömt in dem zweiten Endbereich 6 aus dem Bypasskanal 20 aus, so dass die Strömungsrichtung von dem ersten Endbereich 5 zu dem zweiten Endbereich 6 zeigt.

Vorteilhafterweise weist ein Endbereich 5,6, in welchem das erste Fluid 7 in den Bypasskanal 20 einströmen kann, ein nicht gezeigtes Element, insbesondere ein Klappenelement oder Schieberelement, auf, welches den Bypasskanal 20 für das einströmende erste Fluid 7 verschließen kann, so dass das erste Fluid 7 nur in die Rohre 3 einströmen kann. Insbesondere bei Wärmeübertragern 1 in Kraftfahrzeugen wird Abgas unmittelbar nach dem Start des Verbrennungsmotors durch den Bypasskanal 20 geleitet, um durch Rückführung des Abgases die Abgasqualität zu verbessern und den Motor schneller zu erwärmen.

Das Gehäuse 4 weist ein Isolationselement 24 auf, welches in einer Position zwischen dem Bypasskanal 20 und dem zweiten Strömungskanal 11 angeordnet ist, um eine Energieübertragung zwischen dem ersten Fluid 7, welches im Bypasskanal 20 strömt und dem zweiten Fluid 10, welches in dem zweiten Strömungskanal 11 strömt, zu reduzieren oder zu verhindern.

Die Figur 1 zeigt die Strömungsrichtungen des ersten Fluids 7, insbesondere eines Abgases, und des zweiten Fluids 10, insbesondere eines Kühlmittels, unmittelbar vor und nach dem Wärmeübertrager 1, wobei der Fluidstrom 43 das in den Wärmeübertrager 1 einströmende erste Fluid 7 bezeichnet und der Fluidstrom 42 das aus dem Wärmeübertrager 1 ausströmende erste Fluid 7 bezeichnet und wobei der Fluidstrom 40 das in den Wärmeübertrager 1 einströmende zweite Fluid 10 bezeichnet und der Fluidstrom 41 das aus dem Wärmeübertrager 1 ausströmende zweite Fluid 10 bezeichnet. Gemäß Figur 1 ist der Wärmeübertrager 1 als Gleichstromwärmeübertrager bezeichnet. Alternative Ausführungsformen als Gegenstromwärmeübertrager sind auch möglich.

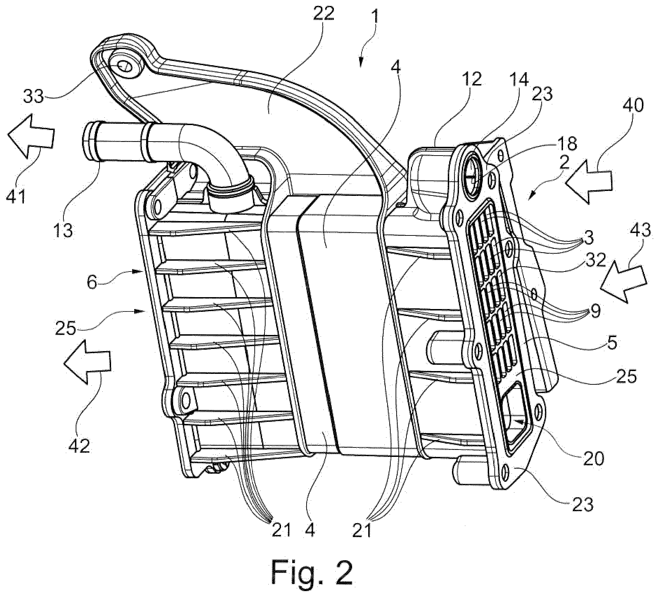

Die Figur 2 zeigt eine Außenansicht eines Ausführungsbeispiels eines erfindungsgemäßen Wärmeübertragers 1 gemäß Figur 1 mit einem integrierten siedeoptimierten Fluideinlass 12 in einer perspektivischen Darstellung.

Gemäß Figur 2 weist ein Rohr 3 eine Querschnittsfläche 32 auf, wobei die Querschnittsflächen 32 der einzelnen Rohre 3 im Wesentlichen uniform sind. Vorteilhaft ist, wie in Figur 2 zu erkennen ist, eine rechteckige Querschnittsfläche 32. Es ist auch möglich, dass die Querschnittsfläche 32 der Rohre 3 andere Formen ausbilden kann, wie insbesondere kreisförmige, ovale, elliptische oder quadratische Formen. Insbesondere ist es auch möglich, dass die einzelnen Rohre 3 unterschiedliche Querschnittsflächen 32 und/oder Größen der Querschnittsflächen 32 aufweisen können.

Bei einer vorteilhaften Ausführungsform des Wärmeübertragers 1 gemäß Figur 2 bildet ein Boden 25, auch Rohrboden genannt, den ersten Endbereich 5 und/oder den zweiten Endbereich 6 aus. Der Boden 25 weist eine Mehrzahl von Aussparungen auf, wobei die Kontur einer Aussparung der äußeren Kontur eines Rohres 3 entspricht. Die Anzahl der Aussparung eines Bodens 25 entspricht der Anzahl der Rohre 3 des Rohrbündels 2, wobei jede Aussparung einem Rohr 3 eindeutig zuzuordnen ist. Der Boden 25 kann die Rohre 3 aufnehmen, in der Art, dass die Rohre 3 so angeordnet sind, dass die äußere Rohrkontur jedes einzelnen Rohres 3 passend in der zu dem Rohr 3 gehörigen Aussparung des Bodens 25 angeordnet ist. Die Rohre 3 des Rohrbündels 2 sind fest mit dem Boden 25 verbunden, so dass der Boden 25 das Gehäuse 4 des Wärmeübertragers 1 für ein Fluid undurchlässig verschließen kann, so dass das zweite Fluid 10 nur durch den Fluideinlass 12 einströmen kann und durch den Fluidauslass 13 ausströmen kann. Zudem weist ein Boden 25 eine Aussparung auf, deren Kontur der Kontur der inneren Wand des Bypasskanals 20 entspricht und so der Bypasskanal 20 mit dem Boden 25 verbunden angeordnet ist. Insbesondere weist der Wärmeübertrager 1 zwei Böden 25 auf, wobei ein Boden 25 den ersten Endbereich 5 bildet und ein Boden 25 den zweiten Endbereich 6 bildet.

Das Gehäuse 4 weist an einer seitlichen Außenfläche Kühlrippen 21 auf, wobei die Kühlrippen 21 Elemente sind, welche mit dem Gehäuse 4 verbunden sind oder in das Gehäuse 4 integriert sind. Die Figur 1 zeigt die Anordnung einer Mehrzahl von Kühlrippen 21. Solche Kühlrippen 21 können die Kühlung des Gehäuses 4 durch einen außen vorbei strömenden Luftstrom verbessern.

Vorteilhaft sind gemäß Figur 2 insbesondere nahe des Fluideinlasses 12 und nahe des Fluidauslasses 13 eine Mehrzahl von Kühlrippen 21 angeordnet, wobei in dem gezeigten Ausführungsbeispiel des Wärmeübertragers 1 nahe des Fluideinlasses 12 weniger Kühlrippen 21 angeordnet sind als nahe des Fluidauslasses 13. Die Kühlrippen 21 vergrößern die äußere gesamte Oberfläche des Wärmeübertragers 1 und können dadurch die Energieübertragung von dem Wärmeübertrager 1 an die Umgebung, insbesondere durch Wärmeleitung, verbessern und damit die Temperatur des zweiten Fluids 10, insbesondere einem Kühlmittel, reduzieren. Bei einem für den oben beschriebenen Gleichstrombetrieb ausgebildeten Wärmeübertrager 1 gemäß Figur 2, ist die Temperatur des zweiten Fluids 10 nahe des Fluidauslasses 13 am höchsten, so dass nahe des Fluidauslasses 13 eine Mehrzahl von Kühlrippen 21 eingesetzt wird, um die Temperatur des zweiten Fluids 10 zu reduzieren. Weiterhin ist bei einem solchen Wärmeübertrager 1 die Temperaturdifferenz zwischen dem ersten Fluid 7 und dem zweiten Fluid 10 und damit die Energieübertragung von dem ersten Fluid 7 auf das zweite Fluid 10 nahe des Fluideinlasses 12 am höchsten, so dass nahe des Fluideinlasses 12 eine Mehrzahl von Kühlrippen 21 angeordnet ist, um einen Teil der vom ersten Fluid 7 auf das zweite Fluid 10 übertragenen Energie an die Umgebung abgeben zu können.

Die Figur 2 zeigt ein Halteelement 22, welches integral mit dem Gehäuse 4 verbunden ist oder mit diesem verbunden ist und auf der Oberseite des Gehäuses 4 angeordnet ist bzw. angreift. Das Halteelement 22 ist, wie aus Figur 2 zu erkennen, vorteilhaft an einer Position zwischen dem Fluideinlass 12 und dem Fluidauslass 13 mit dem Gehäuse 4 verbunden, wobei sich das Halteelement 22 seitlich oder oberhalb des Gehäuses 4 erstreckt, in der Art, dass das Halteelement 22 in Richtung des Fluidauslasses 13 geneigt ist und seitlich neben dem Fluidauslass 13 angeordnet ist. Alternative Gestaltungen des Halteelements sind ebenso möglich.

Das Halteelement 22 weist ein Befestigungselement 33 für eine Befestigung des Gehäuses 4 des Wärmeübertragers 1 an einem nicht gezeigten Element, beispielsweise am Verbrennungsmotor oder an der Karosserie des Kraftfahrzeugs auf.

Das Gehäuse 4 des Wärmeübertragers 1 weist gemäß Figur 2 in dem ersten Endbereich 5 und in dem zweiten Endbereich 6 ein Flanschelement 23 auf, so dass der erste Endbereich 5 bzw. der zweite Endbereich 6 mit einem nicht gezeigten Element, welches in Strömungsrichtung des ersten Fluids 7 vor bzw. nach dem Wärmeübertrager angeordnet ist, formschlüssig verbindbar ist. Das Flanschelement 23 ist insbesondere in das Gehäuse 4 integriert. Der Boden ist fest mit dem Flanschelement 23 verbunden oder einteilig mit dem Flanschelement 23 ausgebildet. Das nicht gezeigte Element kann beispielsweise ein Diffusor oder ähnliches sein.

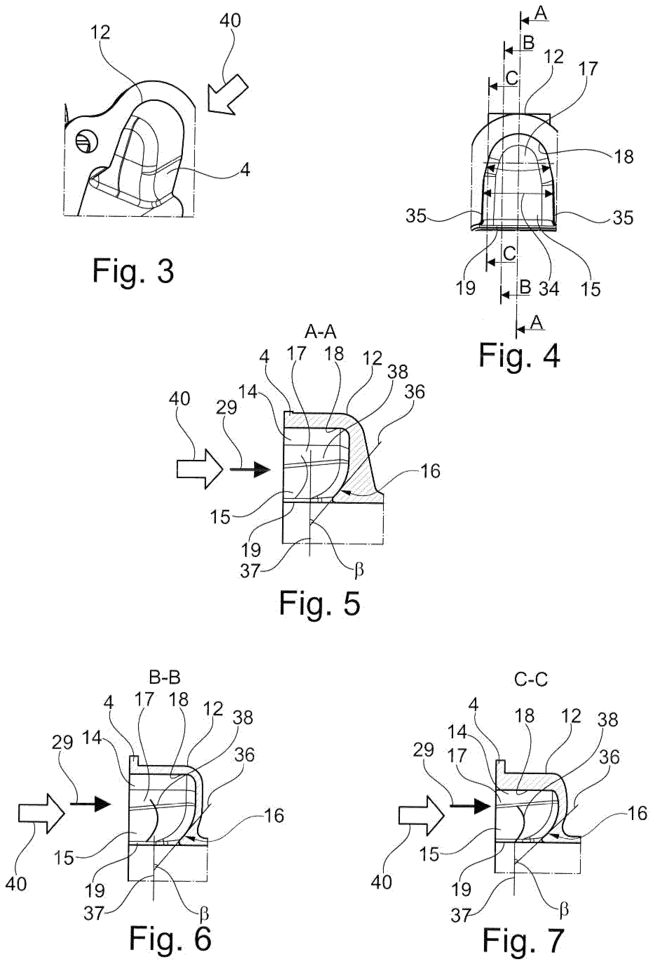

Die Figur 3 zeigt eine Außenansicht eines in das Gehäuse 4 integrierten siedeoptimierten Fluideinlasses 12 gemäß der Figuren 1 und 2 in perspektivischer Darstellung.

Die Figur 4 zeigt eine frontale Ansicht des erfindungsgemäßen Fluideinlasses 12 aus Figur 3, welcher in das Gehäuse 4 des Wärmeübertragers 1 integriert ist.

Der Kanal 17, den der Fluideinlass 12 ausbildet, weist gemäß Figur 4 eine Querschnittsfläche 34 auf, welche senkrecht zur Längsrichtung 28 des Fluideinlasses 12 ausgerichtet ist. Erfindungsgemäß weist die Querschnittsfläche 34 des Kanals 17 des Fluideinlasses 12, insbesondere im stromabwärtigen Abschnitt 15 des Fluideinlasses 12, eine Aufweitung 35 der Querschnittsfläche 34 auf, wobei die Querschnittsfläche 34 gegenüber einer kreisförmigen Querschnittsfläche aufgeweitet ist und die Aufweitung 35 senkrecht zur Strömungsrichtung des zweiten Fluids 10 gemäß Figur 4 in stromabwärtiger Richtung zunimmt. Weiterhin zweckmäßig ist, dass der Kanal 17 im Bereich der Öffnung 19 die größte Aufweitung 35 aufweist. Dadurch strömt das zweite Fluid 10 entlang der Strömungsbegrenzungswand 18 und strömt in der Art durch die Öffnung 19 in das Gehäuse 4 ein, dass insbesondere die Ecken und Randbereiche des Gehäuses 4 im Eintrittsbereich des ersten Fluids 7 mit einströmendem zweiten Fluid 10 versorgt werden, um das Siederisiko in diesen Bereichen zu reduzieren.

Die Figuren 5, 6 und 7 zeigen Längsschnitte durch den erfindungsgemäßen siedeoptimierten Fluideinlass 12, welcher in das Gehäuse 4 integriert ist, gemäß Figur 3 und Figur 4 entlang der Linien A-A, B-B bzw. C-C.

An die Strömungsbegrenzungswand 18 im stromabwärtigen Abschnitt 15 des Fluideinlasses 12 ist, wie in den Figuren 5, 6 und 7 gezeigt, mindestens eine Tangente 36 anlegbar, wobei die mindestens eine Tangente 36 tangential an der Strömungsbegrenzungswand 18 an der Stelle der Öffnung 19 anliegt. Die, in den Figuren 5, 6 und 7 nicht dargestellten Rohre 3 des Rohrbündels 2 gemäß Figur 1 bilden eine Ebene 37 aus, welche senkrecht zur Längsrichtung 8 der Rohre 3 des Rohrbündels 2 ist. Die Ebene 37 ist in den dargestellten Figuren 5, 6 und 7 senkrecht zur Zeichenebene. Die mindestens eine Tangente 36 bildet mit der Ebene 37 mindestens einen Winkel β aus, wobei der Winkel β vorteilhaft ungleich 0° oder ungleich 90° ist. So kann der stromabwärtige Abschnitt 15 eine Stromumlenkungseinheit 16 aufweisen und die Strömungsrichtung 26 des zweiten Fluids 10 in der Öffnung 19 gemäß Figur 1 bestimmen.

Vorteilhafterweise ist ein Winkel β im Bereich von 10° bis 80°, vorteilhaft von 20° bis 70°, weiterhin vorteilhaft von 30° bis 60° und insbesondere vorteilhaft beträgt der Winkel β 45°. So kann durch den Winkel β die Strömungsrichtung 26 auf die Ausbildung des Gehäuses 4 des Wärmeübertragers 1 angepasst werden.

Der stromabwärtige Abschnitt 15 des Fluideinlasses 12 weist eine Längsrichtung 38 auf, welche in der Mitte des Kanals 17, insbesondere gekrümmt, angeordnet ist. Die Strömungsbegrenzungswand 18 des den Fluideinlass 12 bildenden Kanals 17 bildet im stromabwärtigen Abschnitt 15 des Fluideinlasses 12 eine nicht gezeigte Querschnittsfläche 39 aus, welche senkrecht zur Längsrichtung 38 und zu der Zeichenebene der Figuren 5, 6 und 7 angeordnet ist und welche in dem stromabwärtigen Abschnitt 15 des Fluideinlasses 12 in stromabwärtiger Richtung zu der Öffnung 19 in der Längsrichtung 38 eine nicht dargestellte Verjüngung 44 aufweist. Zweckmäßigerweise ist die Verjüngung 44 so ausgebildet, dass der stromabwärtige Abschnitt 15 eine erfindungsgemäße Stromumlenkungseinheit 16 aufweisen kann.

Die Verjüngung 44 des Kanals 17 ist derart ausgebildet, dass das zweite Fluid in der Öffnung 19 eine solche Strömungsrichtung 26 und eine solche Strömungsgeschwindigkeit aufweist, so dass bei einem Auftreffen auf einen Boden 25 das zweite Fluid 10 derart aufgeteilt wird, dass eine gleichmäßige Verteilung im Eintrittsbereich des heißen ersten Fluids 7 erreicht werden kann.

Mit einer Ausführungsform dieser Erfindung kann also ohne Mehrkosten das Siederisiko eines Wärmeübertragers 1 reduziert werden. Insbesondere die Integration des Fluideinlasses 12 für das zweite Fluid 10 in das Gehäuse 4 kann bei einem Druckgussgehäuse, insbesondere aus Metall, wie beispielsweise Aluminium, oder bei einem Spritzgussgehäuse, insbesondere aus Kunststoff, vorteilhaft sein. Der Fluideinlass 12 kann derart gestaltet sein, so dass das zweite Fluid 10 gleichmäßig in die siedegefährdeten Bereiche des Wärmeübertragers 1 im Eintrittsbereich des ersten Fluids 7 geleitet werden kann.

Zweckmäßigerweise ist der Fluideinlass 12 also so gestaltet, dass das zweite Fluid 10 nicht wie bekannt in einem Winkel α von 90° zur Längsrichtung 8 der Rohre 3 einströmt, sondern insbesondere entgegen der Strömungsrichtung 27 des ersten Fluids 7 in Richtung eines Endbereiches 5,6 einströmt.

## Patentansprüche

1. Wärmeübertrager (1) mit einem Rohrbündel (2) mit einer Mehrzahl von Rohren (3) und mit einem Gehäuse (4) mit einem ersten Endbereich (5) und mit einem zweiten Endbereich (6), wobei die Rohre (3) des Rohrbündels (2) sich in dem Gehäuse (4) erstrecken, wobei die Rohre (3) von einem ersten Fluid (7) in einer Längsrichtung (8) der Rohre (3) durchströmbar sind und somit ein erster Strömungskanal (9) gebildet ist, wobei das erste Fluid (7) in einem der Endbereiche (5,6) des Gehäuses (4) in die Rohre (3) einströmt und in dem anderen der Endbereiche (5,6) des Gehäuses (4) aus den Rohren (3) ausströmt, wobei die Rohre (3) von einem zweiten Fluid (10) umströmbar sind und somit ein zweiter Strömungskanal (11) gebildet ist, wobei das Gehäuse (4) einen Fluideinlass (12) für das zweite Fluid (10) und einen Fluidauslass (13) für das zweite Fluid (10) aufweist, wobei der Fluideinlass (12) einen stromaufwärtigen Abschnitt (14) und einen stromabwärtigen Abschnitt (15) aufweist, wobei der stromaufwärtige Abschnitt (14) zur Einströmung des zweiten Fluids (10) in den Fluideinlass (12) dient und wobei der stromabwärtige Abschnitt (15) zur Einströmung des zweiten Fluids (10) in das Gehäuse (4) dient, **dadurch gekennzeichnet, dass** der stromabwärtige Abschnitt (15) des Fluideinlasses (12) eine Stromumlenkungseinheit (16) aufweist, wobei der Fluideinlass (12) einen Kanal (17) ausbildet und eine den Kanal (17) begrenzende Strömungsbegrenzungswand (18) aufweist, wobei der Kanal (17) im stromabwärtigen Abschnitt (15) eine Öffnung (19) als offenes Ende ausbildet und wobei die Strömungsbegrenzungswand (18) im stromabwärtigen Abschnitt (15) derart gewölbt ausgebildet ist, dass das im stromabwärtigen Abschnitt (15) des Fluideinlasses (12) strömende zweite Fluid (10) in der Öffnung (19) eine Strömungsrichtung (26) aufweist und die Strömungsrichtung (26) in der Öffnung (19) einen Winkel α zur Längsrichtung (8) der Rohre (3) des Rohrbündels (2) ausbildet, wobei der Winkel α ungleich 90° ist.

2. Wärmeübertrager nach Anspruch 1, **dadurch gekennzeichnet, dass** der Winkel α im Bereich von 10° bis 80°, vorteilhaft von 20° bis 70°, weiterhin vorteilhaft von 30° bis 60° ist oder insbesondere vorteilhaft 45° beträgt.

3. Wärmeübertrager nach mindestens einem der Ansprüche 1 oder 2, **dadurch gekennzeichnet, dass** der Fluideinlass (12) für das zweite Fluid (10) benachbart zu einem näher gelegenen Endbereich (5,6) der beiden Endbereiche (5,6) angeordnet ist, wobei die Strömungsrichtung (26) des zweiten Fluids (10) in der Öffnung (19) in Richtung auf den näher gelegenen Endbereich (5,6) zeigt oder in diese Richtung geneigt ist.

4. Wärmeübertrager nach mindestens einem der Ansprüche 1 bis 3, **dadurch gekennzeichnet, dass** die Rohre (3) des Rohrbündels (2) eine Ebene (37) ausbilden und die Ebene (37) senkrecht zur Längsrichtung (8) der Rohre (3) des Rohrbündels (2) angeordnet ist und wobei an die Strömungsbegrenzungswand (18) im stromabwärtigen Abschnitt (15) des Fluideinlasses (12) mindestens eine Tangente (36) anlegbar ist und die mindestens eine Tangente (36) tangential an der Strömungsbegrenzungswand (18) an der Stelle der Öffnung (19) anliegt, wobei die mindestens eine Tangente (36) mit der Ebene (37) einen Winkel β bildet, wobei der Winkel β ungleich 0° und ungleich 90° ist.

5. Wärmeübertrager nach Anspruch 4, **dadurch gekennzeichnet, dass** der Winkel β im Bereich von 10° bis 80°, vorteilhaft von 20° bis 70°, weiterhin vorteilhaft von 30° bis 60° ist oder insbesondere vorteilhaft 45° beträgt.

6. Wärmeübertrager nach mindestens einem der Ansprüche 1 bis 5, **dadurch gekennzeichnet, dass** der stromabwärtige Abschnitt (15) des Fluideinlasses (12) eine Längsrichtung (38) aufweist, wobei die Strömungsbegrenzungswand (18) des den Fluideinlass (12) bildenden Kanals (17) in dem stromabwärtigen Abschnitt (15) eine Querschnittsfläche (39) ausbildet, wobei in dem stromabwärtigen Abschnitt (15) des Fluideinlasses (12) die Querschnittsfläche (39) in der Längsrichtung (38) des stromabwärtigen Abschnittes (15) des Fluideinlasses (12) eine Verjüngung (44) in stromabwärtiger Richtung zu der Öffnung (19) hin aufweist.

7. Wärmeübertrager nach mindestens einem der vorhergehenden Ansprüche, **dadurch gekennzeichnet, dass** das durch den stromaufwärtigen Abschnitt (14) des Fluideinlasses (12) strömende zweite Fluid (10) eine Strömungsrichtung (29) aufweist und die Strömungsrichtung (29) in einem Winkel γ zu der Längsrichtung (8) der Rohre (3) des Rohrbündels (2) angeordnet ist.

8. Wärmeübertrager nach Anspruch 7, **dadurch gekennzeichnet, dass** der Winkel γ einen Wert von 0°, 90° oder 180° annimmt oder einen Wert zwischen 0° und 180° annimmt.

9. Wärmeübertrager nach mindestens einem der vorhergehenden Ansprüche 6 bis 8, **dadurch gekennzeichnet, dass** die Querschnittsfläche (34) in dem stromabwärtigen Abschnitt (15) des Fluideinlasses (12) eine Aufweitung (35) aufweist, wobei die Querschnittsfläche (34) gegenüber einer kreisförmigen Querschnittsfläche aufgeweitet ist und die Aufweitung (35) senkrecht zur Strömungsrichtung in stromabwärtiger Richtung zunimmt.

10. Wärmeübertrager nach mindestens einem der vorhergehenden Ansprüche, **dadurch gekennzeichnet, dass** der Fluideinlass (12) und/oder der Fluidauslass (13) für das zweite Fluid (10) in das Gehäuse (4) integriert ist bzw. sind und/oder als rohrförmiges Bauteil mit dem Gehäuse (4) verbunden ist bzw. sind.

## Claims

1. A heat exchanger (1) with a tube bundle (2) with a plurality of tubes (3) and with a housing (4) with a first end region (5) and with a second end region (6), wherein the tubes (3) of the tube bundle (2) extend in the housing (4), wherein a first fluid (7) can flow through the tubes (3) in a longitudinal direction (8) of the tubes (3) and thus a first flow channel (9) is formed, wherein the first fluid (7) flows into the tubes (3) in one of the end regions (5, 6) of the housing (4) and flows out of the tubes (3) in the other one of the end regions (5, 6) of the housing (4), wherein a second fluid (10) can flow around the tubes (3) and thus a second flow channel (11) is formed, wherein the housing (4) has a fluid inlet (12) for the second fluid (10) and a fluid outlet (13) for the second fluid (10), wherein the fluid inlet (12) has an upstream section (14) and a downstream section (15), wherein the upstream section (14) serves for the inflow of the second fluid (10) into the fluid inlet (12) and wherein the downstream section (15) serves for the inflow of the second fluid (10) into the housing (4), **characterised in that** the downstream section (15) of the fluid inlet (12) has a flow deflection unit (16), wherein the fluid inlet (12) forms a channel (17) and has a flow limiting wall (18) limiting the channel (17), wherein the channel (17) forms an opening (19) in the downstream section (15) as an open end and wherein the flow limiting wall (18) is formed in a curved manner in the downstream section (15) such that the second fluid (10) flowing in the downstream section (15) of the fluid inlet (12) has a flow direction (26) in the opening (19) and the flow direction (26) in the opening (19) forms an angle α to the longitudinal direction (8) of the tubes (3) of the tube bundle (2), wherein the angle α is other than 90°.

2. The heat exchanger according to claim 1, **characterised in that** the angle α is 10° to 80°, advantageously 20° to 70°, further advantageously 30° to 60° or especially advantageously 45°.

3. The heat exchanger according to at least one of claims 1 or 2, **characterised in that** the fluid inlet (12) for the second fluid (10) is arranged adjacent to a closer end region (5, 6) of the two end regions (5, 6), wherein the flow direction (26) of the second fluid (10) in the opening (19) shows in the direction to the closer end region (5, 6) or is tilted towards this direction.

4. The heat exchanger according to at least one of claims 1 to 3, **characterised in that** the tubes (3) of the tube bundle (2) form a plane (37) and the plane (37) is arranged perpendicular to the longitudinal direction (8) of the tubes (3) of the tube bundle (2) and wherein at least one tangent (36) can be placed on the flow limiting wall (18) in the downstream section (15) of the fluid inlet (12) and the at least one tangent (36) lies tangentially on the flow limiting wall (18) at the location of the opening (19), wherein the at least one tangent (36) forms an angle β with the plane (37), wherein the angle β is other than 0° and other than 90°.

5. The heat exchanger according to claim 4, **characterised in that** the angle β is 10° to 80°, advantageously 20° to 70°, further advantageously 30° to 60° or especially advantageously 45°.

6. The heat exchanger according to at least one of claims 1 to 5, **characterised in that** the downstream section (15) of the fluid inlet (12) has a longitudinal direction (38), wherein the flow limiting wall (18) of the channel (17) forming the fluid inlet (12) forms a cross-sectional area (39) in the downstream section (15), wherein the cross-sectional area (39) in the downstream section (15) of the fluid inlet (12), in the longitudinal direction (38) of the downstream section (15) of the fluid inlet (12), has a tapering (44) in the downstream direction to the opening (19).

7. The heat exchanger according to at least one of the preceding claims, **characterised in that** the second fluid (10) flowing through the upstream section (14) of the fluid inlet (12) has a flow direction (29) and the flow direction (29) is arranged in an angle γ to the longitudinal direction (8) of the tubes (3) of the tube bundle (2).

8. The heat exchanger according to claim 7, **characterised in that** the angle γ assumes a value of 0°, 90° or 180° or assumes a value between 0° and 180°.

9. The heat exchanger according to at least one of the preceding claims 6 to 8, **characterised in that** the cross-sectional area (34) in the downstream section (15) of the fluid inlet (12) has a widening (35), wherein the cross-sectional area (34) is widened opposite a circular cross-sectional area and the widening (35) increases in the downstream direction perpendicular to the flow direction.

10. The heat exchanger according to at least one of the preceding claims, **characterised in that** the fluid inlet (12) and/or the fluid outlet (13) for the second fluid (10) is/are integrated into the housing (4) and/or is/are connected to the housing (4) as a tube-shaped component.

## Revendications

1. Echangeur de chaleur (1) comprenant un faisceau de tubes (2) comportant une pluralité de tubes (3), et comprenant un carter (4) ayant une première zone d'extrémité (5) et ayant une seconde zone d'extrémité (6), où les tubes (3) du faisceau de tubes (2) s'étendent dans le carter (4), où les tubes (3) sont traversés par un premier fluide (7) suivant une direction longitudinale (8) des tubes (3) et, ainsi, est formé un premier conduit d'écoulement (9), où le premier fluide (7), dans l'une des zones d'extrémité (5, 6) du carter (4), entre dans les tubes (3) et, dans l'autre zone d'extrémité (5, 6) du carter (4), sort des tubes (3), où les tubes (3) sont baignés par un second fluide (10) et, ainsi, est formé un deuxième conduit d'écoulement (11), où le carter (4) présente une entrée de fluide (12) pour le second fluide (10) et une sortie de fluide (13) pour le second fluide (10), où l'entrée de fluide (12) présente une partie (14) située en amont et une partie (15) située en aval, où la partie (14) située en amont sert à l'écoulement du second fluide (10) entrant dans l'entrée de fluide (12), et où la partie (15) située en aval sert à l'écoulement du second fluide (10) entrant dans le carter (4), **caractérisé en ce que** la partie (15) - située en aval - de l'entrée de fluide (12) présente un ensemble de retour de flux (16), où l'entrée de fluide (12) forme un conduit (17) et présente une paroi de délimitation d'écoulement (18) délimitant le conduit (17), où le conduit (17), dans la partie (15) située en aval, forme une ouverture (19) configurée comme une extrémité ouverte, et où la paroi de délimitation d'écoulement (18), dans la partie (15) située en aval, est formée en étant bombée, de manière telle que le second fluide (10) s'écoulant dans la partie (15) - située en aval - de l'entrée de fluide (12) présente, dans l'ouverture (19), une direction d'écoulement (26), et la direction d'écoulement (26) forme, dans l'ouverture (19), un angle α par rapport à la direction longitudinale (8) des tubes (3) du faisceau de tubes (2), où l'angle α est différent de 90°.

2. Echangeur de chaleur selon la revendication 1, **caractérisé en ce que** l'angle α se situe dans la plage comprise entre 10° et 80°, de façon avantageuse comprise entre 20° et 70°, également de façon avantageuse comprise entre 30° et 60°, ou bien, de façon particulièrement avantageuse, est de 45°.

3. Echangeur de chaleur selon au moins l'une des revendications 1 ou 2, **caractérisé en ce que** l'entrée de fluide (12) pour le second fluide (10) est disposée de manière adjacente à celle des deux zones d'extrémité (5, 6) qui est la zone d'extrémité (5, 6) la plus proche, où la direction d'écoulement (26) du second fluide (10) pointe, dans l'ouverture (19), en direction de la zone d'extrémité (5, 6) la plus proche, ou bien est inclinée dans cette direction.

4. Echangeur de chaleur selon au moins l'une quelconque des revendications 1 à 3, **caractérisé en ce que** les tubes (3) du faisceau de tubes (2) forment un plan (37), et le plan (37) est disposé en étant perpendiculaire à la direction longitudinale (8) des tubes (3) du faisceau de tubes (2), et où au moins une tangente (36) peut s'appliquer sur la paroi de délimitation d'écoulement (18), dans la partie (15) - située en aval - de l'entrée de fluide (12), et la tangente (36) au moins au nombre de un s'applique tangentiellement sur la paroi de délimitation d'écoulement (18), au niveau de l'ouverture (19), où la tangente (36) au moins au nombre de un forme, avec le plan (37), un angle β, où l'angle β est différent de 0° et différent de 90°.

5. Echangeur de chaleur selon la revendication 4, **caractérisé en ce que** l'angle β se situe dans la plage comprise entre 10° et 80°, de façon avantageuse comprise entre 20° et 70°, également de façon avantageuse comprise entre 30° et 60°, ou bien, de façon particulièrement avantageuse, est de 45°.

6. Echangeur de chaleur selon au moins l'une quelconque des revendications 1 à 5, **caractérisé en ce que** la partie (15) - située en aval - de l'entrée de fluide (12) présente une direction longitudinale (38), où la paroi de délimitation d'écoulement (18) du conduit (17) formant l'entrée de fluide (12) forme, dans la partie (15) située en aval, une surface de section transversale (39), où, dans la partie (15) - située en aval - de l'entrée de fluide (12), la surface de section transversale (39), dans la direction longitudinale (38) de la partie (15) - située en aval - de l'entrée de fluide (12), présente un rétrécissement (44) se profilant vers l'ouverture (19), dans la direction aval.

7. Echangeur de chaleur selon au moins l'une quelconque des revendications précédentes, **caractérisé en ce que** le second fluide (10) s'écoulant à travers la partie (14) - située en amont - de l'entrée de fluide (12) présente une direction d'écoulement (29), et la direction d'écoulement (29) est disposée suivant un angle γ par rapport à la direction longitudinale (8) des tubes (3) du faisceau de tubes (2).

8. Echangeur de chaleur selon la revendication 7, **caractérisé en ce que** l'angle γ prend une valeur de 0°, de 90° ou de 180°, ou bien prend une valeur comprise entre 0° et 180°.

9. Echangeur de chaleur selon au moins l'une quelconque des revendications 6 à 8, **caractérisé en ce que** la surface de section transversale (34), dans la partie (15) - située en aval - de l'entrée de fluide (12), présente un élargissement (35), où la surface de section transversale (34) est élargie par rapport à une surface de section transversale de forme circulaire, et l'élargissement (35) augmente perpendiculairement à la direction d'écoulement, dans la direction aval.

10. Echangeur de chaleur selon au moins l'une quelconque des revendications précédentes, **caractérisé en ce que** l'entrée de fluide (12) et / ou la sortie de fluide (13) pour le second fluide (10) est ou sont intégrée (s) dans le carter (4) et / ou est ou sont raccordée(s) au carter (4), en tant que composant de forme tubulaire.
